Europäisches Patentamt

(19) European Patent Office

Office européen des brevets

(11) Publication number: **0 031 444**
**B1**

## (12) EUROPEAN PATENT SPECIFICATION

(45) Date of publication of patent specification: **27.06.84**

(21) Application number: **80107176.2**

(22) Date of filing: **19.11.80**

(51) Int. Cl.³: **H 01 B 1/12, C 08 L 81/02, C 08 L 71/04**

(54) Electronically conductive organic thermoplastic composition.

(30) Priority: **13.12.79 US 103125**

(43) Date of publication of application:
**08.07.81 Bulletin 81/27**

(45) Publication of the grant of the patent:
**27.06.84 Bulletin 84/26**

(84) Designated Contracting States:
**CH DE FR GB IT LI NL SE**

(56) References cited:
US - A - 3 324 087
US - A - 3 948 865
US - A - 4 200 701

THIN SOLID FILMS 69 (1980) J.E. DUBOIS et al.
"Electrical properties of electrochemically
prepared thin polyphenylene oxide films on a
platinum surface: the role of ionic impurities in
electroforming and conduction". pages 141—148

The file contains technical information
submitted after the application was filed and not
included in this specification

(73) Proprietor: **ALLIED CORPORATION**
**Columbia Road and Park Avenue P.O. Box 2245R**
**(Law Dept.)**
**Morristown New Jersey 07960 (US)**

(72) Inventor: **Miller, Granville Guy**
**140 Western Avenue**
**Morristown New Jersey 07960 (US)**
Inventor: **Ivory, Dawn Marie**
**2 Arrowhead Trail**
**Lake Hopatcong New Jersey 07849 (US)**
Inventor: **Schacklette, Lawrence Wayne**
**11 Alden Place**
**Maplewood New Jersey 07040 (US)**
Inventor: **Chance, Ronald Richard**
**21 Davis Avenue**
**Morris Plains New Jersey 07950 (US)**
Inventor: **Elsenbaumer, Ronald Lee**
**175 Mills Street**
**Morristown New Jersey 07960 (US)**
Inventor: **Baughman, Ray Henry**
**41 Glacier Drive**
**Morris Plains New Jersey 07950 (US)**

(74) Representative: **Collier, Jeremy Austin Grey et al,**
**J.A.Kemp & Co. 14, South Square Gray's Inn**
**London WC1R 5EU (GB)**

Courier Press, Leamington Spa, England.

(56) References cited:
**J.C.S. CHEM. COMM., 1980, no. 8, 06-05-1980, J.F. RABOLT et al. "Organic metals: poly-(p-phenylene sulphide) hexafluoroarsenate", pages 347-348**
**CHEMICAL ABSTRACTS, vol. 83, no. 24, December 15, 1975, page 23, abstract 194032u Columbus, Ohio, USA**

## Description

### Background of the invention

This invention relates to conductive polymers having conductivity of at least $10^{-8}$ reciprocal ohm-cm at 25°C, both of the semiconductor type and of the metal type.

Largely insulating polymers are broadly known having conductivities (300°K) ranging from about $10^{-30}$ to $10^{-10}$ reciprocal ohm-cm (Polymer *9* 159—172 (1968).

Moreover, conductive polymers are known, in particular as obtained from polyacetylene, which can be semiconducting or metallic, using various electron acceptor or also electron donor dopants such as particularly arsenic pentafluoride (electron acceptor) and potassium (electron donor).

More recently, some of us have discovered such conductive polymers obtained from poly(para-phenylene) containing dopants as used for polyacetylene. (EP—A—0016305 published 1.10.1980).

Recently also, conductive polymers obtained by electrolytically oxidizing a mix of pyrrole monomers to form polypyrrole copolymers have been reported (Physics Today, Sept. 1979, pg. 21, ref. 7-K. Kanazawa et al., J.C.S. Chem. Comm. to be published). The conductivity of these copolymers is stated to vary by five orders of magnitude to metallic conductivities, without use of a separate doping process.

Although the above noted polyacetylene and poly(para-phenylene) polymers are obtainable as linear rather than network polymers, they are insoluble and infusible. This may be because their conjugated structure results in a comparatively stiff main chain so that conventional polymer processing to provide shaped articles is not possible except by compression of particles into a shape, followed by sintering to consolidate the particles in the desired shape.

What is needed in the art is a plastic susceptible to being doped to impart the properties of a semi-conductor or a metallic conductor and capable of melt or solution processing into shaped articles and of then retaining essentially its original properties; i.e. a thermoplastic or solution processable polymer, susceptible to being doped to impart semiconductor and/or metallic conductor properties. The resulting conductive articles should have utility in the fields of lightweight antistatic materials, electromagnetic shields, electrostatic shields, electrical conduits, electroplatable substrates, optically or capacitatively readable information storage materials, conductive paints, conductive adhesives, electrodes for photochemical reaction battery electrodes; and in general could be used similarly to semiconductors and metals to produce various electronic devices. The present invention is directed to meeting the foregoing and other needs of the art.

### Summary of the invention

This invention provides an electronically conductive organic polymeric composition comprising at least one thermoplastic or solvent processible polymer and at least one electron acceptor and/or electron donor dopant which polymer has (1) a main chain consisting essentially of arylene units and (2) interspersed between arylene units therein, regularly or irregularly along the chain, one or more chalcogen atoms or groups of such atoms, especially sulfur atoms and/or oxygen atoms; said composite having conductivity at 25°C of at least $10^{-8}$ reciprocal ohm-cm. It is quite unexpected and surprising that when the conjugated arylene units of the polymer chain are interrupted by atoms or groups of atoms such as oxygen and sulfur interspersed along the chain between the arylene units, the polymer would still be capable of being made conductive by use of a dopant, since conjugation along the chain would be interrupted by such intruding atom or group of atoms. Possibly, the usefulness of the present doped polymers as conductive materials is due to some interaction between the outer electrons surrounding the atoms such as sulfur and oxygen with the pi electrons in the conjugated bonds and with the dopant; but we do not intend to be bound by any theory of our invention.

### Detailed description
### Polymers

It will be appreciated that various repeating arylene units can compose the main chain of the polymers of this invention, such as para- and meta-phenylene units, biphenylene units, naphthylene units, substituted arylene units such as meta-phenylene units having a substituent in the 5-position, and many others. Preferred polymers are based on unsubstituted para-phenylene units as the arylene units of the polymers of this invention, in view of the availability and suitability of these polymers for the present purposes.

The chalcogen atoms along the polymer chain between the repeating arylene units can be single atoms of oxygen or sulfur or other chalcogen, or chains of such atoms, as in polysulfides, or combinations of such atoms such as in a sulfone group. Representative polymers useful as starting polymers for purposes of this invention are:

(1) Polyphenylene sulfide (para-isomer), (p-$C_6H_4S)_n$. The main chain arylene units are para-phenylene, and the chalcogen atoms are single —S— atoms. The polymer is commercially available from various sources and is described in Modern Plastics Encyclopedia 1979—80 at pages 80, 82.

(2) Polyphenylene sulfide (meta-isomer), (m-$C_6H_4S)_n$. The main chain arylene units are meta-phenylene, and the chalcogen atoms are single —S— atoms. The polymer is known (US—A—

**0 031 444**

3,354,129 of November 21, 1967 to J. T. Edmonds, Jr. et al.).

(3) Polyphenylene oxide (para-isomer) (p-$C_6H_4O)_n$. The main chain arylene units are para-phenylene, and the chalcogen atoms are single —O— atoms.

(4) Poly(para-phenoxyphenyl sulfide) (p-$C_6H_4S$ $C_6H_4O)_n$. The main chain arylene units are paraphenylene, and the chalcogen atoms are single —S— atoms and single —O— atoms. Synthesis of this polymer has been described by G. Montaudo, G. Bruno, P. Maravigha, P. Finocchiaro, and G. Centineo in J. of Polymer Science, Polym. Phys. Ed. *11* 65—79 page 77 (1973, John Wiley and Sons, Inc.).

(5) Poly(para-phenylene disulfide), (p-$C_6H_4SS)_n$. The main chain arylene units are paraphenylene and the chalcogen atoms are pairs of sulfur atoms, —SS—. Its synthesis is described by G. Montaudo et al. in J. of Polymer Science, Polym. Chem. Ed. *12* 2881—9 (1974, John Wiley and Sons, Inc.).

(6) Polyetheresulfone, (p-$OC_6H_4SO_2C_6H_4)_n$. The main chain arylene units are p-phenylene, and the chalcogen atoms are —O— and —$SO_2$—.

(7) Polyphenylsulfone, (p-$C_6H_4SO_2)_n$. The main chain arylene units are p-phenylene, and the chalcogen atoms are —$SO_2$—.

The above two polymers (6) and (7) are described in Modern Plastics Encyclopedia (McGraw-Hill, Inc.) 1979—80 at pages 116, 118.

Mixtures of the above polymers with each other or with other materials can be used; and more particularly, polyblends (polymeric "alloys") including the above polymers can be used to obtain polymers with easier processability and/or with other modified properties. For example polyblends of polyphenylene sulfide with the commercially available polyimide from benzophenone tetracarboxylic dianhydride and mixed aromatic diisocyanates, such as "Polyimide 2080" of Upjohn Co., can be used in this invention. Moreover, the polymers can be reinforced or filled to modify their properties, e.g. with fibers such as glass, asbestos or metal fibers; or with mineral fillers such as mica, titania and wollastonite; or with carbon black or graphite, or with a heat-stable organic material such as polytetrafluoroethylene. Preferred polymers are those containing sulfur in the main chain between the arylene units and especially poly(paraphenylene sulfide).

The polymers used in this invention can be shaped by powder techniques or by melt processing, e.g. by molding, extruding, or spinning into fibers. When heated and then cooled, the shaped articles retain essentially the properties possessed before heating. Also certain of these polymers can be solution cast to produce films and coatings.

The resulting shaped articles can be used in products with antistatic properties such as floor coverings, wall coverings, draperies, apparel; in protection against static emissions, for example in housings for computers which otherwise might be subject to malfunctions ("glitches") due to static discharges; in electrical shielding, e.g. to separate the conductor core in high voltage cables from the insulator layer; in electrical conduits to obtain flexibility and/or to fabricate complex shapes; in heating elements, heating pads and the like where a selected level of electrical resistance is desired; in objects intended to be electroplated, to facilitate the plating process; in systems for optically or capacitatively readable information storage such as audiovisual recordings read by capacitance difference between the pickup head and the signal-bearing surface; as conductive coatings, paints or adhesives e.g. for use with metals; as electrodes resistant to corrosion; in semiconductor devices; in devices requiring absorption of electromagnetic radiation such as solar energy collectors; and in general wherever a semiconductor or metallic conductor with the properties of a plastic is desired.

Doping

The resulting shaped article for casting can be doped in the usual manner, by exposure to the vapor of the dopant or by exposure to a solution of the dopant. Since generally the dopants are susceptible to deterioration by moisture and oxygen, the polymer should be thoroughly dried, and the doping should be in an atmosphere of the dopant or dopant diluted by an inert atmosphere. Nevertheless, doped articles of the invention have moderate stability toward air so that for some purposes they can be used without special precautions to protect the dopant from deterioration. For example, if used for forming metal coated plastic articles, the doped plastic of the invention can be used without protection against exposure to air, because as the coating with metal proceeds, the metallic coating takes over the protection of the underlying polymer. More generally, the polymers can be formed into the desired shape and placed in a desired electronic device under a protective atmosphere which is maintained present in the device, or the device is encapsulated in an inert plastic coating.

Dopants heretofore known for producing conductive polymers can be used for the present polymers; in particular Lewis acids (such as arsenic pentafluoride) as electron acceptor (p-type dopant) and alkali metals as electron donors (n-type dopant); however, the effectiveness of dopants for purposes of this invention does not necessarily follow the same order for all polymers useable in the invention nor the same as for polymers used in prior art. Representative dopants which can be used include the alkali metals lithium, sodium, potassium, rubidium, cesium; alkali metal arenes such as sodium biphenyl, potassium biphenyl, sodium naphthalene, potassium naphthalene; Lewis acids such as halides of boron, antimony, arsenic; sulfuric acid, perchloric acid; halogens such as chlorine; and other electron donors and electron acceptors.

Examples

The examples which follow are illustrative of our invention and of the best mode contemplated by us for carrying out the invention but are not to be interpreted as limiting.

Example 1

This example describes the doping of poly(p-phenylene sulfide) ("PPS") with the electron acceptor $AsF_5$, to produce a highly conducting material. PPS (filled) is shown as having conductivity of about $10^{-16}$ or $10^{-15}$ reciprocal ohm-cm (Phillips Chemical Co., Technical Service Manual TSM-266, Table at page 2).

About 0.1 g of poly(phenylene sulfide) ("PPS") obtained from Polysciences, Inc., Warrington, Pa., was pressed at room temperature and 830 MPa (120,000 psi) into a disk-shaped pellet 13 mm in diameter and 1 mm in thickness. Four electrodes of 36 gauge platinum wire were connected to the flat surface of the disk with conductive graphite cement (available as "Electrodag") at 1 mm linear spacings.

The sample was placed into a "Pyrex" borosilicate glass cell especially constructed to allow evacuation and introduction of dopants. The platinum wires were passed through glass-metal seals to permit continuous monitoring of electrical conductivity throughout the doping experiment, by the standard four-probe technique of J.A.C.S. *100* 1014—16 (1978). The two outer electrodes were connected to a direct current source (Keithley Model 225). The center wires were connected to an electrometer (Keithley Model 616) for voltage measurement. This arrangement permits continuous monitoring of the voltage and current, whereby electrical conductivity can be calculated by Ohm's Law.

The conductivity cell and sample were evacuated to about $6.7 \times 10^{-7}$ kPa ($5.0 \times 10^{-6}$ torr) overnight. At this point, prior to introducing dopant, conductivity for the pellet was about $10^{-16}$ ohm$^{-1}$ cm$^{-1}$ (Proceedings of 34th Annual Technical Conference of Society of Plastic Engineers *22*, p. 141, 1976).

$AsF_5$ was introduced at initial pressure of 13,3 kPa (100 torr), which was raised to 46,6 kPa (350 torr) and held there for about 36 hours. During dopant the pellet changed from a light tan color to a green, then dark green, and finally black color. Conductivity rose from about $10^{-16}$ ohm$^{-1}$ cm$^{-1}$ to $8.4 \times 10^{-2}$ ohm$^{-1}$ cm$^{-1}$ during the first 24 hours of exposure. After 30 hours conductivity had leveled out at 0.15 ohm$^{-1}$ cm$^{-1}$. When the sample was placed under vacuum maintained by pumping, its conductivity increased gradually to a value of 0.49 ohm$^{-1}$ cm$^{-1}$ after 3 hours.

An elemental analysis of a sample of powdered PPS doped in the same manner indicated a composition, $[C_6H_4S(AsF_5)_{0.66}]_x$.

Example 2

This example describes the preparation of a highly conducting material by treatment of poly(p-phenylene sulfide) with an electron donor, potassium.

Commercially obtained poly(phenylene sulfide) powder was pressed at room temperature and 830 MPa (120,000 psi) to form a 12.7 mm diameter × 1.5 mm thick pellet. This pellet was placed in one end of a "Pyrex" borosilicate glass tube and potassium in the other end. This tube was evacuated to $1.33 \times 10^{-7}$ kPa ($10^{-6}$ torr) and sealed off with a torch. It was then placed in a two-stage furnace with the sample end of the tube at 310°C and the potassium end at 260°C for 5 hours.

The tube was allowed to cool to room temperature then transferred to an argon filled glove box. The conductivity of the sample was measured in the glove box using a Jandel Engineering Ltd. four-point probe apparatus and a Keithley volmeter and current source. The conductivity measured was $1.06 \times 10^{-3}$ ohm$^{-1}$ cm$^{-1}$.

Example 3

This example demonstrates that exposure of the potassium doped poly(p-phenylene sulfide) to hydrogen gas yields a substantial increase in conductivity.

The pellet of poly(p-phenylene sulfide) from Example 2 with a conductivity of $1.06 \times 10^{-3}$ reciprocal ohm-cm was placed in a "Pyrex" glass tube and evacuated to $1.33 \times 10^{-7}$ kPa ($10^{-6}$ torr). 50,7 kPa one-half of an atmosphere, of hydrogen gas was added to the tube, which was then immersed in a 50°C water bath for 4 days. The tube was then removed, evacuated and transferred to the argon filled glove box where the conductivity of the pellet was measured at $9.38 \times 10^{-2}$ reciprocal ohm-cm.

Example 4

This example demonstrates that amorphous films and fibers of poly(p-phenylene sulfide) can be doped to high conductivities with $AsF_5$ gas. A 25,4 μm (1 mil) thick clear transparent film of poly(p-phenylene) sulfide was obtained from Phillips Chemical Co. under the designation PPS-79-848. The amorphous nature of this film was indicated by its transparency and was verified by comparison of infrared measurements made on annealed and unannealed samples according to the method used by D. G. Brady (J. Appl. Poly Sci. *20*, 2541 (1976)).

A portion of this film was cut in the shape of a 1 cm diameter disk. Four platinum wires were attached to the periphery of the disk with graphite cement ("Electrodag"), according to the method of L. J. van der Pauw for obtaining conductivity measurements on Lamellae (Phillips Tech. Rev. *20*(8), 220 (1958/59)).

This sample was then mounted in a glass vacuum cell and exposed at room temperature to 53.3 kPa (400 torr) $AsF_5$. Within seconds the sample began showing a rapid rise in conductivity. At the same time the sample when viewed by transmitted light became a slate blue color. With time this coloration grew increasingly dark until the sample became completely opaque and appeared in reflected light as glossy black. The electrical conductivity rose steadily over a 24-hour period eventually reaching a nearly constant value of just over one reciprocal ohm-cm.

A similar experiment was performed on a 1 mil diameter PPS fiber obtained from Phillips Chemical Co. under the designation PPS-79-807. The fiber was mounted on a glass slide with "Electrodag" graphite cement at four nearly equally spaced points along its length. Electrical contact was made at these points, the outer two being connected to a Keithley Model 225 constant current source and the inner two being connected to a Keithley Model 616 electrometer. The sample was mounted within the same glass vacuum cell used previously in Example 1 and exposed to 26.7 kPa (200 torr) $AsF_5$. The polyphenylene sulfide fiber underwent doping much more rapidly than the film or the pressed pellets. An ultimate conductivity of 0.8 $ohm^{-1}$ $cm^{-1}$ was reached after only 5 hours exposure at room temperature to $AsF_5$.

### Example 5

The following describes the doping of melt molded poly(p-phenylene sulfide) with $AsF_5$ and the effects of crystallinity.

Three melt molded (300°C) plaques of poly(p-phenylene sulfide) were prepared. Each was 1.3 cm in diameter by 0.25 mm thick. One was quick quenched from the mold and was essentially amorphous. Another was quick quenched, then annealed at 170°C for 1.5 h. A third was quick quenched and then annealed at 170°C for 20 h to produce a highly crystalline polymer. Four platinum electrical leads were attached to each plaque with "Electrodag" graphite cement. These plaques were then placed into a 150 ml glass tube and connected to a vacuum line. The system was evacuated to $1.33 \times 10^{-6}$ kPa ($10^{-5}$ torr) then repressurized with gaseous $AsF_5$ to 60.8 kPa (456 torr). The plaques acquired a blue-black sheen almost immediately. They were allowed to remain under $AsF_5$ gas for 48 h. After this time the reaction tube was evacuated to $1.33 \times 10^{-5}$ kPa ($10^{-4}$ torr) for 2 h.

The plaques were removed from the tube in a dry box under Ar. The conductivity of the amorphous plaque was $8.96 \times 10^{-5}$ $ohm^{-1}$ $cm^{-1}$; for the partially annealed plaque was $8.12 \times 10^{-4}$ $ohm^{-1}$ $cm^{-1}$; and for the highly crystalline plaque was $5.52 \times 10^{-4}$ $ohm^{-1}$ $cm^{-1}$. These samples appeared to be only lightly doped with $AsF_5$.

### Example 6

This example describes the fabrication of a Schottky barrier diode with heavily doped ($AsF_5$) poly(p-phenylene sulfide) ("PPS") functioning as the metal and p-type gallium phosphide (GaP) as the semiconductor.

A rectangular bar of PPS was obtained by compressing at room temperature commercially obtained powder of PPS ("Ryton" available from Phillips Chemical Co.) under a pressure of 830 MPa. Two contacts were made to one end of this bar with graphite cement and platinum wires. The bar was then doped under a pressure of 53.3 kPa (400 torr) of $AsF_5$ for 24 hours as in Example 1. The graphite contacts were found to be ohmic with a resistance of approximately 40 ohms each. A rectangular bar of GaP was also prepared with an ohmic contact on one side. The two bars were clamped together between the jaws of a vise held within a dry argon atmosphere. The area of contact was rectifying having a leakage current of 7 nA at a reverse bias of 3 volts and a current of 0.8 mA at a forward bias of 3 volts. Standard analysis (per the method of S. M. Sze "Physics of Semiconductor Devices" John Wiley & Sons, 1969) of the current-voltage characteristic indicated an effective series resistance of 250 ohms and that the doped PPS produces a band-bending potential of approximately 0.9 V. Capacitance-voltage measurement gave a similar result (0.85V). This band bending results from the metallic nature of the conductivity of this doped PPS and is evidence of such metallic nature.

Since the valence band of GaP lies at 6.24 eV with respect to vacuum, the work function of metallic doped PPS is 5.45 eV, a value comparable to those of the most electronegative elemental metals such as gold; and accordingly, the metallic doped PPS can replace such metal in Schottky barrier and other electronic devices.

### Example 7

The following example demonstrates that the PPS polymer becomes a strong IR absorber on doping with $AsF_5$ and that the IR absorption can be eliminated by chemical compensation of the dopant.

Using a Perkin-Elmer Model 727 infrared spectrophotometer, an IR spectrum was taken for a 25,4 $\mu$m (1 mil) thick film of poly(p-phenylene)sulfide described in Example 4. This film was then lightly doped with $AsF_5$ so that it appeared blue in transmitted light. The film was then mounted in a vacuum sealed IR cell equipped with nonreactive AgCl windows. The IR spectrum of this lightly doped film still showed the prominent vibrational transitions of the undoped PPS film with the addition of one sharp peak near 700 $cm^{-1}$ which is attributable to the formation of $AsF_6^-$ anions (K. O. Christe and A. E. Pavlath, Z. anorg. allg. Chem. *335*, 210 (1965)). In addition, the doped polymer exhibited a broad IR absorption (down to at

least 2000 cm$^{-1}$). The absorption results from the presence of free charge carriers, as indicated by the disappearance of this absorption when the electrical conductivity of the doped polymer was sharply reduced by compensation with dimethylamine, $(CH_3)_2NH$. Such capacity for IR absorption makes the doped polymer useful in devices for converting solar energy into heat and in IR shielding applications.

Example 8

A disk-shaped pellet of poly(p-phenylene sulfide), prepared as in Example 1, was placed in a "Pyrex" borosilicate glass tube which was then evacuated to $1.33 \times 10^{-7}$ kPa ($10^{-6}$ torr). At pressure of 0,1 MPa (one atmosphere), chlorine gas was added to the tube. The tube was then sealed off with a torch and placed in a 225°C furnace for 18 hours; then it was transferred to an argon filled glove box where it was opened. The conductivity of the chlorine-doped pellet was measured at 7.9 ohm$^{-1}$ cm$^{-1}$.

Example 9

The following example demonstrates that an iodine solution does not quickly form a highly conducting complex with poly(p-phenylene sulfide).

A 13 mm diameter×1.5 mm thick pellet was prepared by pressing at room temperature commercially obtained powder of poly(p-phenylene sulfide) at 830 MPa (120,000 psi) as in Example 1. The pellet was weighed and placed in a concentrated solution of iodine in hexane and allowed to stir for several hours in a nitrogen filled glove bag. The pellet was then rinsed in hexane, dried, weighed, and its conductivity measured as in Example 1. Although there was a 6.89% increase in weight of the pellet, there was at most only a small increase in conductivity to not above $10^{-7}$ reciprocal ohm-cm (the lowest value measurable with the instrument used).

Example 10

The following example demonstrates that the meta configuration of polyphenylene sulfide forms a highly conducting complex.

Powdered poly(m-phenylene sulfide) prepared according to the method of J. T. Edmonds, Jr. and H. W. Hill, Jr., (US—A—3,354,129 of November 21, 1967 was pressed as in Example 1 into a pellet 13 mm in diameter by 1 mm thick (weight=0.1624 g). This was placed into a 50 ml reaction tube as used in Example 8.

The tube was evacuated to $1.33 \times 10^{-6}$ kPa ($10^{-5}$ torr) and then pressurized at room temperature with AsF$_5$ to 56.9 kPa (428 torr). The pellet turned a green-blue color almost immediately. After 20 min. it became black. The pellet remained under the AsF$_5$ atmosphere for 3.75 h. The tube was then evacuated to $1.33 \times 10^{-6}$ kPa ($10^{-5}$ torr) for 1 h.

The conductivity of the pellet was measured in a dry box under Ar by the four probe technique as in Example 1. It showed a conductivity of $1.31 \times 10^{-2}$ ohm$^{-1}$ cm$^{-1}$. The final weight of the pellet was 0.3830 g; therefore, it absorbed 0.2206 g AsF$_5$ (1.30 mmol). The mole ratio of phenylene sulfide units to AsF$_5$ is 1.16:1.

Example 11

The doping of poly(p-phenylene oxide) with an electron acceptor, AsF$_5$, gives a highly conducting material.

Powdered poly(p-phenylene oxide), prepared according to the method of H. M. van Dort, C. A. M. Hoefs, E. P. Magre, A. J. Schopf, and K. Yntema, *European Polymer Journal 1968 4*, 275—287 was pressed as in Example 2 into a pellet 13 mm in diameter by 1 mm thick (weight 0.1615 g). This pellet was placed into a 50 ml reaction tube as used in Example 8.

The tube was evacuated to $1.33 \times 10^{-6}$ kPa ($10^{-5}$ torr) then pressurized at room temperature with AsF$_5$ gas to 56.9 kPa (428 torr). The pellet turned brown then black in a short period of time. After 20.75 h the tube was evacuated to $1.33 \times 10^{-6}$ kPa ($10^{-5}$ torr) (1 h), then the conductivity of the pellet was measured as in Example 1 in a dry box under Ar.

The conductivity was found to be $2.3 \times 10^{-4}$ ohm$^{-1}$ cm$^{-1}$. This sample was only lightly doped; the uptake of AsF$_5$ was 36.1 mg. Visual inspection revealed that only the surface of the pellet was doped (blackened) by AsF$_5$. The thickness of this surface layer was measured with a micrometer as 0.2 mm, implying that the doped portion of the sample has a conductivity of $1.2 \times 10^{-3}$ ohm$^{-1}$ cm$^{-1}$.

Example 12

This example describes the doping of poly(phenyl sulfone) with the electron acceptor AsF$_5$ to produce a material having increased conductivity.

One gram of poly(phenyl sulfone), obtained as extruded pellets from Polysciences, Inc. and recrystallized twice from dichloromethane, was placed in a "Pyrex" tube and evacuated to a pressure of $6.7 \times 10^{-7}$ kPa ($5.0 \times 10^{-6}$ torr). At this point, the polymer is an insulator.

The cream-colored powder was exposed to AsF$_5$ at a pressure of 53.3 kPa (400 torr) for 16 hours. During that time, the cream-colored solids turned to a light green which then deepened to a very dark green. At the end of 16 hours, excess AsF$_5$ was removed under vacuum and the solids taken into a drybox under an argon atmosphere. A small portion of the solids was ground to a fine powder and pressed in a Barnes Engineering KBr pellet press. The conductivity of this pellet, measured as in Example 1, was found to be $8.37 \times 10^{-7}$ ohm$^{-1}$ cm$^{-1}$.

**Claims**

1. An electronically conductive organic polymeric composition comprising at least one thermoplastic and/or solvent processible polymer and at least one electron acceptor or electron donor dopant or mixture thereof, which polymer has a main chain consisting essentially of (1) arylene units and (2) interspersed between arylene units therein, regularly or irregularly along the chain, one or more chalcogen atoms or groups of such atoms; said composite having conductivity at 25°C of at least $10^{-8}$ reciprocal ohm-cm.

2. Composition of claim 1 wherein said arylene units are poly(p-phenylene) units.

3. Composition of claim 2 wherein the dopant is an electron acceptor.

4. Composition of claim 2 wherein the dopant is an electron donor.

5. Composition of claim 1 wherein said polymer is poly(p-phenylene sulfide) and said dopant is selected from the group consisting of arsenic pentafluoride, chlorine and potassium.

6. Composition of claim 1 wherein said polymer is poly(m-phenylene sulfide).

7. Composition of claim 1 wherein said polymer is poly(p-phenylene oxide).

8. Composition of claim 7 wherein the dopant is arsenic pentafluoride.

9. Composition of claim 1 in the form of a film.

10. Composition of claim 1 in the form of a fiber.

## Patentansprüche

1. Elektronisch leitfähige, organische Polymerzusammensetzung mit wenigstens einem thermoplastischen und/oder mit Lösungsmittel verarbeitbaren Polymeren und wenigstens einem Elektronenakzeptor- oder Elektronendonor-Dotierstoff oder Gemisch derselben, wobei das Polymer eine Hauptkette besitzt, die im wesentlichen aus (1) Aryleneinheiten und (2) einem oder mehreren regelmäßig oder unregelmäßig entlang der Kette zwischen Aryleneinheiten darin eingestreuten Chalcogenatomen oder Gruppen solcher Atome besteht, und die Zusammensetzung eine Leitfähigkeit bei 25°C von wenigstens $10^{-8}$ reziproken Ohm-Zeitimetern bestizt.

2. Zusammensetzung nach Anspruch 1, worin die Aryleneinheiten Poly-(p-phenylen)-Einheiten sind.

3. Zusammensetzung nach Anspruch 2, worin der Dotierstoff ein Elektronenakzeptor ist.

4. Zusammensetzung nach Anspruch 2, worin der Dotierstoff ein Elektronendonor ist.

5. Zusammensetzung nach Anspruch 1, worin das Polymere Poly-(p-phenylensulfid) ist und der Dotierstoff aus der Gruppe Arsenpentafluorid, Chlor und Kalium ausgewählt ist.

6. Zusammensetzung nach Anspruch 1, worin das Polymere Poly-(p-phenylensulfid) ist.

7. Zusammensetzung nach Anspruch 1, worin das Polymere Poly-(p-phenylenoxid) ist.

8. Zusammensetzung nach Anspruch 7, worin der Dotierstoff Arsenpentafluorid ist.

9. Zusammensetzung nach Anspruch 1 in der Form eines Filmes.

10. Zusammensetzung nach Anspruch 1, in der Form einer Faser.

## Revendications

1. Composition polymère organique électroniquement conductrice comprenant au moims un polymère thermoplastique et/ou pouvant être traité dans un solvant et au moins un produit de dopage accepteur d'électrons ou donneur d'électrons ou leur mélange, ce polymère ayant une chaîne principale se composant essentiellement (1) d'unités d'arylène et (2) parsemés entre les unités d'arylène, de manière régulière ou irrégulière le long de la chaîne d'un ou plusieurs atomes de chalcogène ou groupes de ces atomes; ce composite ayant une conductibilité à 25°C d'au mons $10^{-8}$ ohms-cm inverse.

2. Composition selon la revendication 1, dans laquelle les unités d'arylène sont les unités de poly(p-phénylène).

3. Composition selon la revendication 2, dans laquelle le produit de dopage est un accepteur d'électrons.

4. Composition selon la revendication 2, dans laquelle le produit de dopage est un donneur d'électrons.

5. Composition selon la revendication 1 dans laquelle le polymère est du poly(sulfure de p-phénylène) et le produit de dopage est choisi dans le groupe se composant de pentafluorure d'arsenic, de chlore et de potassium.

6. Composition selon la revendication 1, dans laquelle le polymère est du poly(sulfure de m-phénylène).

7. Composition selon la revendication 1, dans lequelle le polymère est du poly(oxyde de p-phénylène).

8. Composition selon la revendication 7, dans laquelle le produit de dopage est du pentafluorure d'arsenic.

9. Composition selon la revendication 1 sous la forme d'un film.

10. Composition selon la revendication 1 sous la forme d'une fibre.